# EUROPEAN PATENT APPLICATION

(11) **EP 4 197 781 A1**
(43) Date of publication of application: **21.06.2023**
(21) Application number: 22212559.3
(22) Date of filing: 09.12.2022
(51) Int. Cl.: B32B 18/00, C04B 35/634

(54) **PRESSURIZED STABILIZATION OF PLIES FOR IMPROVED INTERLAMINAR PROPERTIES**

(30) Priority: 20.12.2021 US 202117556443
(71) Applicant: Raytheon Technologies Corporation, Farmington, CT 06032 (US)
(72) Inventor: READ, Kathryn S., Marlborough, 06447 (US)
(74) Representative: Dehns

(57) **Abstract**

A method of preparing a ceramic fabric for use in a ceramic matrix composite includes arranging a plurality of tows to form a ceramic fabric with a first inter-tow spacing, applying a binder material to the ceramic fabric, and applying pressure to the ceramic fabric to form a pressure stabilized ceramic fabric. Each of the plurality of tows of the ceramic fabric has a first thickness, and each of at least a subset of the plurality of tows of the pressure stabilized ceramic fabric has a second thickness less than the first thickness.

## Description

### BACKGROUND

The present invention relates to ceramic matrix composites, and more particularly, to the preparation of woven ceramic fabrics for use in ceramic matrix composites.

In the processing of ceramic matrix composites (CMCs), there is a need to infiltrate matrix within and around tow bundles. In a woven CMC system, there are often large voids that exist between adjacent tows of a preform that can become large defects after matrix infiltration. Such defects diminish interlaminar properties of the composite structure. Contact area between plies or layers of the preform also affects interlaminar properties of the final component. Thus, a need exists for means of reducing voids and increasing contact area are of ceramic fabrics used to construct the preform.

### SUMMARY

From one aspect, there is provided a method of preparing a ceramic fabric for use in a ceramic matrix composite includes arranging a plurality of tows to form a ceramic fabric with a first inter-tow spacing, applying a binder material to the ceramic fabric, and applying pressure to the ceramic fabric to form a pressure stabilized ceramic fabric. Each of the plurality of tows of the ceramic fabric has a first thickness, and each of at least a subset of the plurality of tows of the pressure stabilized ceramic fabric has a second thickness less than the first thickness.

There is also provided a ceramic preform as set forth in claim 14 and a ceramic matrix composite component as set forth in claim 15.

Features of embodiments are set forth in the dependent claims.

### BRIEF DESCRIPTION OF THE DRAWINGS

FIG. 1 is a simplified illustration of a woven fabric sheet.
FIG. 2 is a simplified cross-sectional view of a ceramic tow of the woven fabric sheet taken along line 2-2 of FIG. 1.
FIG. 3 is a simplified view of a pressure stabilized woven fabric sheet.
FIG. 4 is a simplified cross-sectional view of a ceramic tow of the pressure stabilized woven fabric sheet taken along line 4-4 of FIG. 3.
FIG. 5 is a flow chart illustrating steps of preparing the woven fabric sheet of FIG. 1 for use in a ceramic matrix composite.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings.

### DETAILED DESCRIPTION

This disclosure presents various methods for debulking ceramic fabrics prior to preforming. Vacuum or mechanical pressure can be applied to sheets of ceramic fabric to flatten/widen the ceramic tows. A polymer binder can be applied to the fabric prior to debulking to help stabilize the fabric during and after debulking. The resulting stabilized fabric has reduced inter-tow spacing and increased surface area along the contact (i.e., lay-up) surface. The stabilized fabric can subsequently be incorporated into a preform of a CMC component.

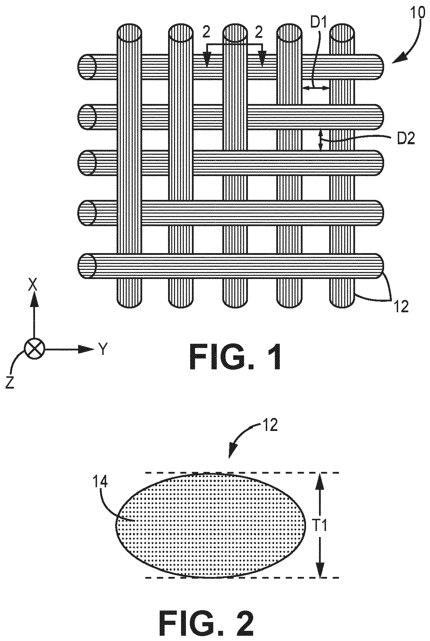

FIG. 1 is a simplified illustration of woven fabric sheet 10. FIG. 2 is a cross-sectional view of tow 12 taken along line 2-2 of FIG. 1. Sheet 10 is formed from perpendicular warp and weft tows 12, extending respectively along the x-axis and y-axis of FIG. 1. Tows 12 can be arranged in various woven architectures such as plain, harness (e.g., 3, 5, 8, etc.), twill, braid, or non-symmetric to name a few non-limiting examples. It is further possible for some architectures to include tows 12 disposed at non-right angles (e.g., 45°) from either or both the warp and weft tows 12. Tows 12 can be formed from bundles of ceramic filaments 14 (shown as dark spots in FIG. 2), such as silicon carbide. Other ceramics are contemplated herein. Additionally, other possible fabric architectures are discussed in greater detail below.

Sheet 10 can exhibit inter-tow spacing defined by the distances D1 between adjacent warp tows and D2 between adjacent weft tows. The particular spacing between two adjacent warp or weft tows 12 can be generally uniform along the length of the respective tows 12, or can vary along the length of the respective tows 12. Variances typically arise from manufacturing imperfections. A combination of generally uniform and varied inter-tow spacing within sheet 10 is also possible. As shown in FIG. 2, each tow 12 can have a thickness T1, measured here along the z-axis of FIG. 1. In an exemplary embodiment, tows 12 can each include roughly 500 filaments and have a thickness T1 ranging from 140 microns to 160 microns.

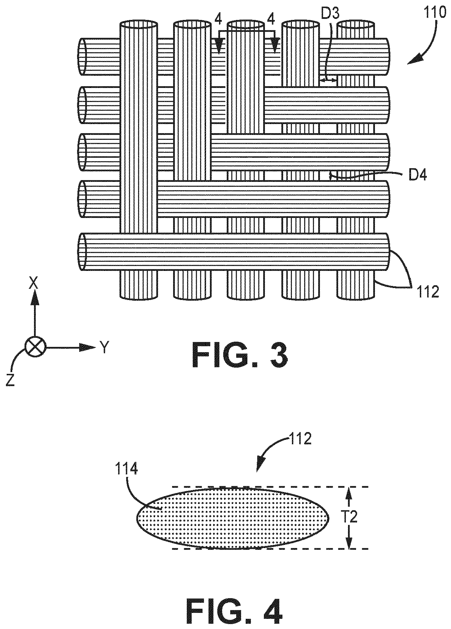

It can be desirable to reduce inter-tow spacing (i.e., either or both D1 and D2) and increase tow surface area (e.g., along the x-y plane) on opposing sides of sheet 10. FIG. 3 is a simplified illustration of woven fabric sheet 110, which represents sheet 10 after undergoing a debulking process using pressure, as is discussed below in greater detail. Accordingly, sheet 110 can be referred to as a pressure stabilized sheet. FIG. 4 is a cross-sectional view of tow 112 taken along line 4-4 of FIG. 3.

As shown in FIGS. 3 and 4, tows 112 are flattened/widened such that tows 112 generally expand toward adjacent tows 112 in the x-y plane, giving sheet 110 a greater tow 112 surface area in the x-y plane. Inter-tow spacing of sheet 110 is generally defined by the distances D3 between adjacent warp tows and D4 between adjacent weft tows. In the embodiment shown, D3 < D1 and D2 < D4. In an alternative embodiment using a more selective debulking process, D3 or D4 may be generally equal to the corresponding dimension on sheet 10 (i.e., D1 and D2, respectively). Additionally, a thickness T2 of tows 112 is affected by the debulking process such that T2 < T1 of tow 12. In an exemplary embodiment, T2 can be 50% to 80% of T1, generally resulting in the thickness of sheet 110 to be about 50% to 80% the overall thickness of sheet 10, depending on the particular woven architecture.

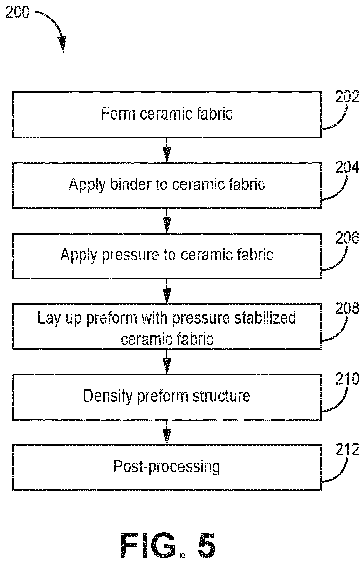

FIG. 5 is a flowchart illustrating selected steps of method 200, used to prepare ceramic fabrics, including woven fabric sheet 10, for use in a ceramic matrix composite. Steps 202-212 of method 200 are discussed in combination with FIGS. 1-5.

At step 202, a ceramic fabric can be formed, for example, by weaving ceramic tows 12 into a sheet (e.g., sheet 10). An alternative fabric architecture can include tows 12 arranged in a unidirectional manner (i.e., uniformly along the x or y-axis) as a sheet or tape. In some embodiments, a dry woven or unidirectional ceramic fabric can subsequently be impregnated with a polymer material to form a pre-preg sheet. Alternatively, tows 12 can be braided onto a mandrel to form a sleeve or other braided structure. In yet another alternative embodiment, tows 12 may be arranged as a continuous roll of ceramic fabric. Each of these fabrics can have characteristics identical or substantially similar to those discussed above (e.g., inter-tow spacing, tow thickness, etc.) with respect to sheet 10. One distinction with respect to a unidirectional fabric can be that inter-tow spacing is represented by a single distance (e.g., D1 or D2).

At step 204, the ceramic fabric can be prepared for the debulking process. More specifically, a binder material can be applied to the ceramic fabric. An exemplary binder can be a polymer binder such as polyvinyl alcohol (PVA) and water, or polyvinyl butyral (PVB) and ethanol. The binder can be applied to the ceramic fabric in various ways, including spraying, pipetting, and dipping, to name a few non-limiting examples. In an embodiment in which the ceramic fabric is a continuous roll, a roll of pre-preg may be generated in this step. In an embodiment in which the ceramic fabric is a pre-preg, whether prior to or as a result of step 204, the application of the binder may not be necessary if impregnated with sufficient amounts of PVA or PVB. In some embodiments, the binder can additionally include ceramic particles formed from one or a combination of silicon carbide, boron carbide, hafnium oxide, hafnium boride, aluminum oxide, ytterbium oxide, zirconium boride. Particle sizes can range from 20 microns to 100 microns, and in an exemplary embodiment, from 40 microns to 70 microns. Ceramic particles are intended to remain interspersed throughout the fabric to facilitate matrix formation (step 210). The binder can be applied to an extent suitable, with respect to a particular fabric, to prevent tow distortion during subsequent handling, maintain a compressed state of the tows after debulking, and facilitate bonding between fabric layers in the preform. By way of example, a binder loading within the ceramic fabric ranging from 2% to 15% by weight can be sufficient in this regard.

At step 206 and once a desired amount of binder is applied to the ceramic fabric, the fabric can be debulked using vacuum or mechanical pressure. In one embodiment, a prepared sheet 10 can be placed, for example, on a vacuum debulking table or in an autoclave under pressure. Heat can also be applied at a temperature ranging from 100°F to 300°F (37.8°C to 148.9°C). The application of heat is particularly useful to help accelerate the removal of the solvent (i.e., water or ethanol) from the binder material. Sheet 10 can be placed in a vacuum pressure apparatus such that one side/surface abuts a hard surface (e.g., a plate) of the apparatus, while the opposing side/surface abuts another hard surface or membrane. Multiple sheets 10 can be placed in the apparatus separated from other sheets 10 by hard surfaces. Pressure stabilized sheet(s) 10 can be formed into plies for subsequent preforming. For braided structures, vacuum pressure and heat can be applied to a braided layer on the mandrel or other underlying tooling, where the tooling acts as the hard surface. Additional layers can be braided onto the pressure stabilized braided layer, with debulking occurring in a layer-by-layer fashion. The polymer of the binder (i.e., PVA or PVB) remains in ceramic fabric to help retain the compressed/flattened state of the tows (i.e., tows 112) during further processing. The polymer of the binder can also give the pressure stabilized fabric "tack" to facilitate preforming by helping the fabric remain in position, retain a fold, etc.

In an alternative embodiment, debulking can be carried out using mechanical pressure using, for example, a platen press or rollers to apply pressure to the ceramic fabric. Such an embodiment may be best suited for planar fabrics, such as sheet 10. Mechanical debulking can also include heat, similar to vacuum debulking discussed above. With respect to the use of rollers, one or more rollers can be rolled across one side/surface of sheet 10 while the opposing side/surface is supported by a planar plate or table. Alternatively, sheet 10 can be fed through two opposing rollers gapped to the desired thickness of the pressure stabilized sheet 110. When rolled across sheet 10, the roller(s) can be oriented to roll in the direction of the warp or weft tows 12 (i.e., 0° or 90°), or at any angle therebetween (e.g., 30°-45°). The former orientation, that is, being aligned with the warp or weft tows 12, allows for selective targeting of the tows 12 corresponding to the direction of the roller(s) to flatten those tows 12 to a greater extent. An angled orientation allows for a more even distribution of pressure across both warp and weft tows 12.

At step 208, the pressure stabilized fabric, whether plies formed from a sheet or roll, or a braided structure, can be incorporated into a preform. The preform can include only pressure stabilized fabrics, or a mixture of conventional fabrics and pressure stabilized fabric. As used herein, the term "conventional" refers to fabrics not having been debulked prior to preforming in any manner described above. The increased fabric surface area (e.g., the x-y plane of sheet 110) translates to improved layer-to-layer contact surface area during preforming. This can increase mechanical (e.g., interlaminar) properties of the final CMC component. The less rounded nature of tows 112 as compared to tows 12 can further create a smoother outer surface of the preform and subsequent CMC component, which can be particularly advantageous in aerospace applications. Step 208 can optionally include a conventional debulking step, that is, debulking of the preform using any method known in the art. This may be desirable to further refine preform thickness, or to assimilate conventional and pressure stabilized fabrics.

At step 210, the preform can undergo matrix formation and densification using one or a combination of chemical vapor infiltration or chemical vapor deposition (CVI or CVD). During densification, the preform layers are infiltrated by reactant vapors, and a gaseous precursor deposits on the underlying fibers. The matrix material can be a silicon carbide or other suitable ceramic material. Densification is carried out until the resulting CMC has reached the desired residual porosity. In most cases, the extent of the matrix is such that it is disposed at least partially around and throughout the ceramic tows of the preform to achieve the desired final porosity of the particular component. In an alternative embodiment, densification can include other methodologies including, but not limited to, melt infiltration and polymer infiltration and pyrolysis (PIP).

At step 212, various post-processing steps can be performed, such as the application of one or more protective coatings (e.g., environmental and/or thermal barrier coatings). A bond coat can also be applied to facilitate bonding between the CMC and a protective coating. Other protective coatings, especially those suitable for use in a gas turbine engine environment, are contemplated herein.

A CMC component formed with the disclosed stabilized ceramic fabric can be incorporated into aerospace, maritime, or industrial equipment, to name a few, non-limiting examples.

### Discussion of Possible Embodiments

The following are non-exclusive descriptions of possible embodiments of the present invention.

A method of preparing a ceramic fabric for use in a ceramic matrix composite includes arranging a plurality of tows to form a ceramic fabric with a first inter-tow spacing, applying a binder material to the ceramic fabric, and applying pressure to the ceramic fabric to form a pressure stabilized ceramic fabric. Each of the plurality of tows of the ceramic fabric has a first thickness, and each of at least a subset of the plurality of tows of the pressure stabilized ceramic fabric has a second thickness less than the first thickness.

The method of the preceding paragraph can optionally include, additionally and/or alternatively, any one or more of the following features, configurations and/or additional components:
In the above method, the pressure stabilized fabric can have a second inter-tow spacing less than the first inter-tow spacing.

In any of the above methods, the binder material can include one of polyvinyl alcohol and water, and polyvinyl butyral and ethanol.

In any of the above methods, the binder material can further include ceramic particles.

In any of the above methods, the ceramic particles can be formed from a material selected from the group consisting of silicon carbide, boron carbide, hafnium oxide, hafnium boride, aluminum oxide, ytterbium oxide, zirconium boride, and combinations thereof.

In any of the above methods, the step of arranging the plurality of tows can include one of weaving to form a woven ceramic fabric comprising a plurality of warp tows and a plurality of weft tows, and unidirectionally arranging the plurality of tows.

Any of the above methods can further include impregnating the ceramic fabric with a polymer material to form a pre-preg.

In any of the above methods, the woven ceramic fabric can be arranged as one of a sheet and a continuous roll.

In any of the above methods, the step of arranging the plurality of tows can include braiding the tows on a mandrel.

In any of the above methods, the step of applying pressure to the ceramic fabric can include applying vacuum pressure and heat to the ceramic fabric.

In any of the above methods, the step of applying pressure to the ceramic fabric comprises applying mechanical pressure and heat to the ceramic fabric using a roller or a platen press.

In any of the above methods, the step of applying pressure to the ceramic fabric can include rolling the fabric using at least one roller.

In any of the above methods, the at least one roller can be oriented, with respect to the subset of the plurality of tows, at an angle ranging from 0° to 90°.

Any of the above methods can further include incorporating the pressure stabilized fabric into a preform, and densifying the preform.

In any of the above methods, the step of incorporating the stabilized fabric into a preform can further include forming a plurality of plies from the pressure stabilized fabric and laying up the plurality of plies.

In any of the above methods, the step of densifying the preform comprises at least one of chemical vapor infiltration, chemical vapor deposition, polymer infiltration and pyrolysis, and melt infiltration.

In any of the above methods, the second thickness is 50% to 80% of the first thickness.

In any of the above methods, the plurality of ceramic tows are formed from silicon carbide.

A ceramic preform includes a plurality of abutting ceramic subcomponents being formed from any of the above pressure stabilized fabrics.

A ceramic matrix composite component includes the above ceramic preform and a ceramic matrix disposed at least partially around and throughout the plurality of tows.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of preparing a ceramic fabric (110) for use in a ceramic matrix composite, the method comprising:
arranging a plurality of tows (12) to form a ceramic fabric (10) with a first inter-tow spacing (D1, D2);
applying a binder material to the ceramic fabric (10); and
applying pressure to the ceramic fabric (10) to form a pressure stabilized ceramic fabric (110);
wherein each of the plurality of tows (12) of the ceramic fabric (10) has a first thickness (T1); and
wherein each of at least a subset of the plurality of tows (112) of the pressure stabilized ceramic fabric (110) has a second thickness (T2) less than the first thickness (T1).

2. The method of claim 1, wherein the pressure stabilized fabric (110) has a second inter-tow spacing (D3, D4) less than the first inter-tow spacing (D1, D2).

3. The method of claim 1 or 2, wherein the binder material comprises either:
polyvinyl alcohol and water; or
polyvinyl butyral and ethanol.

4. The method of claim 3, wherein the binder material further comprises ceramic particles, wherein the ceramic particles are optionally formed from a material selected from the group consisting of silicon carbide, boron carbide, hafnium oxide, hafnium boride, aluminum oxide, ytterbium oxide, zirconium boride, and combinations thereof.

5. The method of any preceding claim, wherein the step of arranging the plurality of tows (12) comprises one of weaving to form a woven ceramic fabric (10) comprising a plurality of warp tows (12) and a plurality of weft tows (12), and unidirectionally arranging the plurality of tows (12), wherein the woven ceramic fabric (10) is optionally arranged as one of a sheet and a continuous roll.

6. The method of claim 5 and further comprising: impregnating the ceramic fabric (10) with a polymer material to form a pre-preg.

7. The method of any of claims 1 to 4, wherein the step of arranging the plurality of tows (12) comprising braiding the tows (12) on a mandrel.

8. The method of any preceding claim, wherein the step of applying pressure to the ceramic fabric (10) comprises applying vacuum pressure and heat to the ceramic fabric (10).

9. The method of any of claims 1 to 7, wherein the step of applying pressure to the ceramic fabric (10) comprises applying mechanical pressure and heat to the ceramic fabric (10) using a roller or a platen press, wherein optionally:
the step of applying pressure to the ceramic fabric (10) comprises rolling the fabric (10) using at least one roller; and/or
the at least one roller is oriented, with respect to the subset of the plurality of tows (12), at an angle ranging from 0° to 90°.

10. The method of any preceding claim and further comprising:
incorporating the pressure stabilized fabric (110) into a preform; and
densifying the preform, wherein the step of densifying the preform optionally comprises at least one of chemical vapor infiltration, chemical vapor deposition, polymer infiltration and pyrolysis, and melt infiltration.

11. The method of claim 10, wherein the step of incorporating the pressure stabilized fabric (110) into a preform comprises forming a plurality of plies from the pressure stabilized fabric (110) and laying up the plurality of plies.

12. The method of any preceding claim, wherein the second thickness (T2) is 50% to 80% of the first thickness (T1).

13. The method of any preceding claim, wherein the plurality of ceramic tows (12) are formed from silicon carbide.

14. A ceramic preform comprising:
a plurality of abutting ceramic subcomponents, the plurality of ceramic subcomponents being formed from the pressure stabilized fabric (110) formed by the method of claim 1.

15. A ceramic matrix composite component comprising:
the preform of claim 14; and
a ceramic matrix disposed at least partially around and throughout the plurality of tows (112).
